# EUROPEAN PATENT APPLICATION

(11) **EP 1 253 800 A2**
(43) Date of publication of application: **30.10.2002**
(21) Application number: 02008441.4
(22) Date of filing: 13.04.2002
(51) Int. Cl.: H04Q 11/04

(54) **Method and apparatus for facilitating inverse multiplexing over an ATM network**

(30) Priority: 24.04.2001 US 841734
(71) Applicant: ALCATEL, 75008 Paris (FR)
(72) Inventor: De Paul, Kenneth E., Wake Forest, NC 27587 (US)
(74) Representative: Dreiss, Fuhlendorf, Steimle & Becker

(57) **Abstract**

A method for facilitating inverse multiplexing over asynchronous transfer mode is disclosed herein. The method includes receiving a stream of sequentially aligned ATM cells via an originating end point logical communication link. A sequence identifier is associated with each one of the ATM for creating sequence identified ATM cells. The sequence identified ATM cells are forwarded to an destination endpoint logical communication link in a distributed manner over a plurality of IM communication links. A first one of said IM communication links has disparate data transmission rates in at least one data transmission direction with respect to a second one of the IM communication links.

## Description

### FIELD OF THE DISCLOSURE

The disclosures herein relate generally to inverse multiplexing over asynchronous transfer mode and more particularly to facilitating inverse multiplexing over asynchronous transfer mode via communication links having disparate data transmission rates.

### BACKGROUND

Inverse Multiplexing (IM) is a data communications technique that allows a grouping of low-speed communication links into one logical high-speed communication link of approximately the same transmission bandwidth capacity as the sum of the low-speed communication links. Such a grouping of low-speed communication links for facilitating IM are referred to herein as a group of IM communication links. IM techniques are often used when cost or technical feasibility prevents deployment of a single high speed point-to-point communication link. For all essential purposes, the group of IM communication links behaves identically to a single point-to-point high-speed communication link of the same capacity.

Asynchronous Transfer Mode (ATM) is a transport protocol that is widely deployed in high-speed data networks and that allows the multiplexing of different information streams across one ATM formatted communication link. IM over ATM (IMA) is an ATM forum standard (AF-PHY-0086.001) which outlines a standardized technique for using IM techniques over ATM formatted communication links. In the case of ATM, a group of ATM formatted IM communication links behaves as if it were a single high-speed ATM communication link. For example., in the case of IMA over a group of IM communication links each having an upstream data transmission rate of 1.5 megabits and a downstream data transmission rate of 1.5 megabits, the aggregate data transmission rate would be 3.0 megabits in both the upstream and the downstream directions.

Conventional IMA implementations are capable of being facilitated over symmetric transmission facilities and uniform transmission facilities. A symmetric transmission facility includes a plurality of IM communication links each have the same data transmission rate in an upstream and a down stream direction. A uniform transmission facility includes a plurality of IM communication links each having the same upstream data transmission rate and each having the same downstream data transmission rate, wherein the downstream data transmission rate is different than the upstream data transmission rate.

A key limitation of conventional IMA implementations is that such implementations are not capable of being facilitated over a plurality of communication links having disparate data transmission rates. Conventional IMA implementations require that each one of the IM communication links in a group of IM communication links have a common upstream data transmission rate and a common downstream data transmission rate. For example, all of the downstream data transmission rates being 1.5 megabits and all of the upstream data transmission rates being 500 megabits. This requirement limits the utility of IMA because the upstream data transmission rates, downstream data transmission rates or both are often different for different communication links. This is often the case for ADSL communication links that may not synchronize at the same data transmission rates.

Therefore, facilitating IMA via IM communication links synchronized at disparate data transmission rates is useful.

### BRIEF DESCRIPTION OF THE DRAWINGS

FIG. 1 is a block diagram view depicting an embodiment of an IMA-ADSL communication system according to the disclosures herein.

FIG. 2 is a block diagram depicting an embodiment of a plurality of IM communication links between the central office communication apparatus and customer premises apparatus depicted in FIG. 1.

FIG. 3 is a flow chart view depicting an embodiment of a method for facilitating inverse multiplexing over asynchronous transfer mode via IM communication links having disparate data transmission rates.

### DETAILED DESCRIPTION OF THE FIGURES

With a conventional Digital Subscriber Line Access Multiplexor (DSLAM), the DSLAM enables a subscriber to establish a connection between a data processing device and a communication network via a single ADSL data communication link terminated in a conventional ADSL modem. Establishing a connection via a single ADSL data communication link, which is typically a relative low-speed communication link, limits the speed at which data can be communicated between the data processing device and the communication network. In many situations, cost or technical feasibility prevents deployment of a single high-speed point-to-point communication link for increasing the speed at which data can be communicated between the data processing device and the communication network.

As disclosed herein, the use of a DSLAM and an ADSL modem capable of facilitating Inverse Multiplexing over Asynchronous Transfer Mode (hereinafter referred to as IMA) enables data to be communicated between the data processing device and the communication network via two or more IM-ADSL communication links. IMA functionality operates by de-multiplexing data traffic arriving from an originating logical high-speed communication link into a plurality of lower speed transmissions, communicating the plurality of lower speed transmissions to a remote multiplexor device over a plurality of IM communication links, and remultiplexing the low-speed transmissions into the original high speed flow at a destination logical high-speed communication link. With respect to ADSL communication links, an increase in the aggregate service bit rate is exhibited as a result of the DSLAM and ADSL modem utilizing IMA functionality to distribute data traffic across the two or more ADSL communication links. IMA functionality as disclosed herein is advantageous, as conventional implementations of IMA functionality are not compatible with data communication links, such as typical ADSL communication links, that have disparate upstream and/or down stream data communication rates.

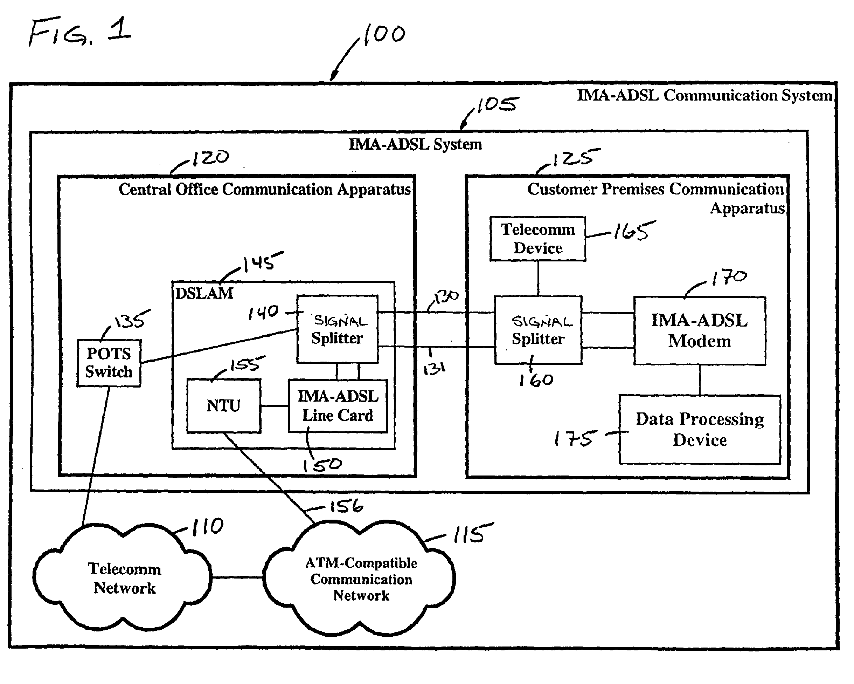

An embodiment of a communication system 100 is depicted in FIG. 1. The communication system 100 includes an IMA-compatible Asymmetric Digital Subscriber Line (ADSL) system 105 having a telecommunication network 110 and an Asynchronous Transfer Mode (ATM) compatible communication network 115 connected thereto. The telecommunication network 110 is connected directly to the ATM-compatible communication network 115 for enabling direct communication therebetween. A Public Switched Telephone Network (PSTN) is an example of the telecommunication network 110. A suitably configured computer network system, such as a suitably configured portion of the Internet, is an example of the ATM-compatible data network 115. In other embodiments (not shown) of the communication system 100, the telecommunication network 110 is not connected directly to the ATM-compatible data network 115.

The ADSL system 105 includes a central office communication apparatus 120 and a customer premises communication apparatus 125 connected to the central office apparatus 120 for providing an ADSL service therebetween. The central office communication apparatus 120 facilitates Plain Old Telephone Service (POTS) and ADSL service for the customer premises communication apparatus 125 via the telephone network system 110 and the ATM-compatible data network 115, respectively. The central office communication apparatus 120 is connected to the customer premises communication apparatus 125 via a first paired-conductor transmission line 130 and a second paired-conductor transmission line 131. A twisted pair telephone line that is typically used for carrying telephony signals is an example of the first and the second paired-conductor transmission lines 130, 131. ADSL data is carried over the first and the second paired-conductor transmission lines 130, 131. A POTS telephone signal may be carried over one or both of the paired-conductor transmission lines 130, 131.

The central office communication apparatus 120 includes a POTS switch 135, a signal splitter 140 of a Digital Subscriber Line Access Multiplexor (DSLAM) 145, and an IMA - ADSL line card 150 of the DSLAM 145 and a Network Termination Unit 155 of the DSLAM 145. The POTS switch 135 and the IMA-ADSL line card 150 are connected to the signal splitter 140. The DSLAM 145 is connected to the ATM-compatible data network via the NTU 155. An active signal splitter and a passive signal splitter are examples of the signal splitter 140.

The customer premises communication apparatus 125 includes a signal splitter 160, a telecommunication device 165, an IMA-ADSL modem 170, and a data processing device 175. The telecommunication device 165 and the IMA-ADSL modem 170 are both connected to the signal splitter 160 of the customer premises communication apparatus 125. The data processing device 175 is connected to the IMA-ADSL modem 170. A telephone and a personal computer are examples of the telecommunication device 165 and the data processing device 175, respectively.

The signal splitter 140 of the DSLAM 145 is connected to the signal splitter 160 of the customer premises communication apparatus 125 via the first and the second paired-conductor transmission lines 130, 131. The signal splitters 140, 160 allow ADSL data signals to co-exist on the paired-conductor transmission lines 130, 131 with telephony signals. In this manner, simultaneous access to ADSL service and POTS service is provided.

The signal splitters 140, 160 are bi-directional devices. In a traffic direction away from the paired-conductor transmission lines (130, 131), each one of the signal splitters 140, 160 splits a corresponding aggregate signal into a POTS signal and an ADSL signal. In a traffic direction toward the paired-conductor transmission lines (130, 131), each one of the signal splitters 140, 160 combines a POTS signal and an ADSL signal into a corresponding aggregate signal.

With respect to conventional functionality provided by the DSLAM, the DSLAM 145 is capable of multiplexing a plurality of ADSL data signals onto a high-speed data communication link, such as an ATM data communication link 156. In an upstream direction (toward the data network 115), the DSLAM 145 combines, or multiplexes, ADSL data traffic from different subscribers onto the ATM data communication link 156. The ATM data communication link 156 is connected between the NTU 155 and the ATM-compatible data network 115. In a downstream direction (toward the customer premises communication apparatus 125), the DSLAM 145 divides high-speed data traffic from the data network 115 into a plurality of ADSL communication links corresponding to particular paired conductor transmission line, such as the first and the second paired-conductor transmission lines 130, 131. In a conventional manner, the DSLAM 145 may divide high-speed data traffic among a plurality of different customer premises communication apparatuses.

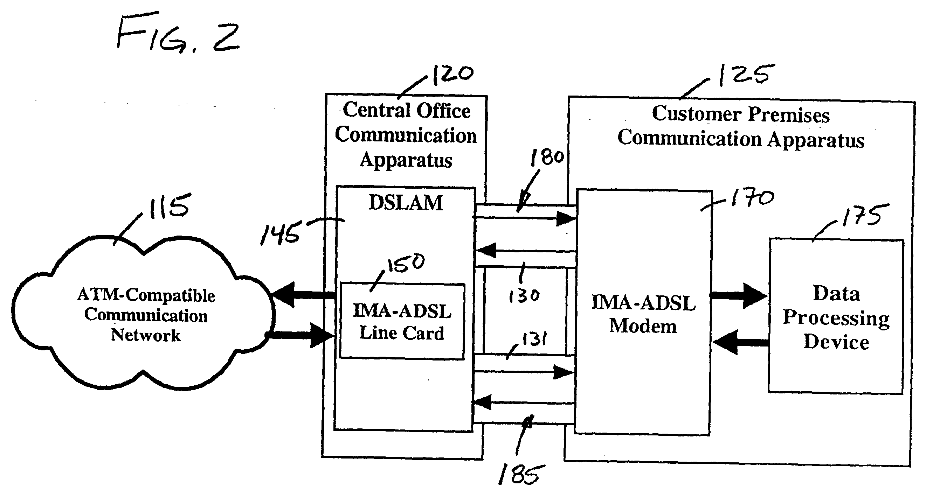

Referring to FIG. 2, the IMA-ADSL line card 150 and the IMA-ADSL modem 170 are disclosed herein to be capable of enabling IMA functionality in an ADSL environment via ADSL communication links having disparate downstream and/or upstream data transmission rates. The IMA-ADSL line card 150 and the IMA-ADSL modem 170 are examples of an IMA communication device. The first and the second paired conductor transmission lines 130, 131 serve to establish a first inverse multiplexing (IM) communication link 180 and a second IM communication link 185, respectively, between the DSLAM 145 and the IMA-ADSL modem 170. Each one of the IM communication links 180, 185 is capable of transmitting data in an upstream direction toward the ATM communication network 115 and a downstream direction toward the data processing device 175.

In at least one embodiment (not shown) of the DSLAM 145, the DSLAM 145 includes more than one IMA-ADSL line card 150. Each line card 150 is associated with a different customer premises communication apparatus. In this manner, IMA functionality may be provided by the DSLAM 145 to a plurality of customer premises communication apparatuses. In addition, a line card may have one or more IMA groups which could combine line card ports into a specific IMA grouping to provide mulitple IMA functionality to a communication apparatus. For example, a line card with 12 ADSL ports could have an IMA grouping of 4 connected to one communications appratus and another IMA grouping of 8 connected to a different communications apparatus. Both of these communications apparatuses may be located at the same or different physical locations.

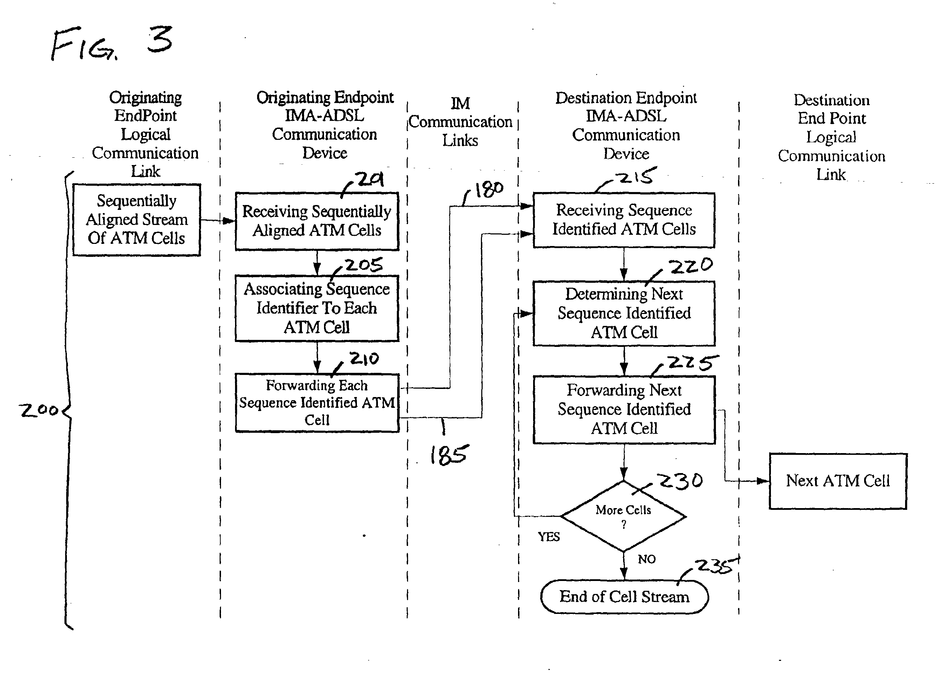

An embodiment of a method 200 for facilitating IMA functionality via communication links having disparate data transmission rates is depicted in FIG. 3. An operation 201 for receiving sequentially aligned ATM cells from an originating endpoint logical communication link is performed. In at least one embodiment of the operation 201, the operation 201 is facilitated by an originating endpoint IMA-ADSL communication device and includes holding at least a portion of the sequentially aligned ATM cells in a data storage device, such as a buffer of the originating endpoint IMA-ADSL communication device. In the upstream direction as defined herein, an IMA-ADSL modem is an example of the originating endpoint IMA-ADSL communication device. In the downstream direction as defined herein, an IMA-ADSL line card of a DSLAM is an example of the originating endpoint IMA-ADSL communication device.

In response to receiving the sequentially aligned ATM cells, an operation 205 for associating a sequence identifier with each ATM cell is performed. One embodiment of the operation 205 includes determining a sequence code for each one of the ATM cells and inserting the sequence code into an information payload portion of the corresponding one of the ATM cells. Another embodiment of the operation 205 includes determining a sequence code for each one of the ATM cells and inserting the sequence code in a header portion of the corresponding one of the ATM cells. In at least one embodiment of the operation 205, the operation 205 is facilitated by the originating endpoint IMA-ADSL communication device. The information payload portion and the header portion are examples of cell information blocks of an AYM cell. After the sequence identifier is assigned to the corresponding ATM cell, such an ATM cell is defined herein to be a sequence identified ATM cell.

An operation 210 for forwarding each sequence identified ATM cell to a destination endpoint IMA-ADSL communication device is performed. In one embodiment of the operation 210, the operation 210 is facilitated by the originating endpoint IMA-ADSL communication device. In the upstream direction as defined herein, an IMA-ADSL line card of a DSLAM is an example of the destination endpoint IMA-ADSL communication device. In the downstream direction as defined herein, an IMA-ADSL modem is an example of the destination endpoint IMA-ADSL communication device.

In response to performing the operation 210, an operation 215 for receiving each sequence identified ATM cell is performed. In one embodiment of the operation 215, the operation 215 is facilitated by the destination endpoint IMA-ADSL communication device and includes holding at least a portion of the sequence identified ATM cells in a data storage device, such as a buffer of the destination endpoint IMA-ADSL communication device.

After receiving at least a portion of the sequence identified ATM cells, an operation 220 is performed for determining a next sequence identified ATM cell to forward over a destination endpoint logical communication link. The operation 220 includes determining the sequence identifier for a plurality of sequence identified ATM cells. In one embodiment of the operation 220, the operation 220 is facilitated by the destination endpoint IMA-ADSL communication device and includes determining the next sequence identified ATM cell from a plurality of sequence identified ATM cells residing in a data storage device, such as a buffer of the destination endpoint IMA-ADSL communication device.

After performing the operation 220, an operation 225 is performed for forwarding the next sequence identified ATM cell over the destination endpoint logical communication link. Also after performing the operation 220, an operation 230 is performed for determining whether any remaining sequence identified ATM cells associated with the ATM cell stream exist, such as in the buffer of the destination endpoint IMA-ADSL communication device. If one or more remaining sequence identified ATM cells exist, the operations 220-230 are repeated until there are no remaining sequence identified ATM cells to be forwarded over the destination endpoint logical communication link. In one example of the operation 230, the operation 230 is performed in response to performing the operation 220. In another embodiment of the operation 230, the operation 230 is performed in response to performing the operation 225.

The operations 220-230 are jointly defined as an operation for forwarding an aligned stream of inversely multiplexed ATM cells. In at least one embodiment of the operation for forwarding an aligned stream of inversely multiplexed ATM cells, such an operation includes sequentially retrieving the sequence identified ATM cells from a data storage device such as a buffer.

As disclosed herein, the sequence identifiers enable sequential order of ATM cells to be maintained as they are forwarded across the plurality of IM communication links. As a result, the ATM cells are presented in the correct sequence to an ATM layer of IMA-ADSL software associated with the destination endpoint IMA-ADSL communication device.

In at least one embodiment of the method 200 disclosed herein, a first data processor program controls at least a portion of the operations associated with the originating endpoint IMA-ADSL communication device and a second data processor program controls at least a portion of the operations associated with the destination endpoint IMA-ADSL communication device. In this manner, the first and the second data processor programs control at least a portion of the operations necessary to properly transmit data across the plurality of IM communication links. The term data processor program is defined herein to refer to computer software, data processor algorithms or any other type of instruction code capable of controlling operations associated with a data processor.

The first and the second data processor programs provide their respective functionality between a DSL layer and an ATM layer of the corresponding IMA-ADSL communication device. The first and the second data processor programs are processible by a data processor of the corresponding IMA-ADSL communication device. The first and the second data processor programs may be resident on the corresponding IMA-ADSL communication device or may be accessible by the corresponding IMA-ADSL communication device from an apparatus such as a diskette, a compact disk, a network storage device or other suitable apparatus. A data processor program accessible from an apparatus by a data processor is defined herein as a data processor program product.

As disclosed herein, IMA is capable of being facilitated via communication links having disparate upstream and/or downstream data transmission rates. Such facilitation of IMA is advantageous because it is common for data communication links, such as ADSL communication links, to not synchronize at the same upstream and/or downstream data transmission rate. Accordingly, the inverse multiplexing techniques disclosed herein provide significant advantages relative to the conventional inverse multiplexing techniques.

Utilizing the IMA techniques disclosed herein, a first ADSL communication link is combined with one or more additional ADSL communication links that have disparate upstream and/or downstream data transmission rates relative to the first ADSL communication link. The result is a group of physically lower speed ADSL communication links that behave identically to a single point-to-point high-speed communication link of the same capacity as the group of lower speed ADSL communication links. In this manner, increased data transmission rates can be achieved when cost or technical feasibility prevents deployment of a single high-speed point-to-point communication link. It is contemplated that the methods, systems and apparatuses disclosed herein may be useful with data communication links that have disparate data transmission rates, other than ADSL communication links.

### Example - Three IM-ADSL Communication Links

Data Communication is facilitated via three IM communication links. At a central office location, the communication apparatus the DSLAM is an ALCATEL ASAM Series unit having an IMA-ADSL line card capable of facilitating IMA functionality as disclosed herein. The DSLAM is connected to an IMA-ADSL modem at a customer premises via three separate twisted pair telephone lines connected through respective signal splitters at the central office and customer premises. The IMA-ADSL modem is capable of facilitating IMA functionality as disclosed herein. The three IM communication links are IM-ADSL communication links each implemented over a respective one of the three twisted pair telephone lines.

The upstream and downstream data transmission rates (DTR) for a typical IM-ADSL communication link synchronized according to this example are depicted below in Table 1.

**Table 1**

| **Downstream DTRUpstream DTR** | | |
|---|---|---|
| IM Link A kilobits/sec | 1.5 megabits/sec | 300 |
| IM link B kilobits/sec | 1.0 megabits/sec | 400 |
| IM link C kilobits/sec | 2.0 megabits/sec | 600 |
| ***Aggregate megabits*/*sec*** | ***4.5 megabits*/*sec*** | ***1.3*** |

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical, chemical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A method for facilitating inverse multiplexing over asynchronous transfer mode, comprising:
receiving a stream of sequentially aligned ATM cells via an originating end point logical communication link;
associating a sequence identifier with each one of said ATM cells for creating sequence identified ATM cells; and
forwarding said sequence identified ATM cells in a distributed manner over a plurality of IM communication links, wherein a first one of said IM communication links having disparate data transmission rates in at least one data transmission direction with respect to a second one of said IM communication links.

2. The method of claim 1 wherein associating the sequence identifier includes determining a sequence code for each one of said ATM cells and inserting the sequence code for each one of said ATM cells into an information payload portion of a corresponding one of said ATM cells.

3. The method of claim 1 wherein associating the sequence identifier includes determining a sequence code for each one of said ATM cells and inserting the sequence code for each one of said ATM cells into a header portion of a corresponding one of said ATM cells.

4. The method of claim 1 wherein associating the sequence identifier is facilitated by an originating endpoint IMA-ADSL communication device.

5. The method of claim 1 wherein forwarding said sequence identified ATM cells in a distributed manner over a plurality IM communication links includes forwarding said sequence identified cells over a plurality of IM-ADSL communication links.

6. The method of claim 5 wherein:
a first one of said IM-ADSL communication links is synchronized at a first upstream data transmission rate; and
a second one of said IM-ADSL communication links is synchronized at a second upstream data transmission rate different than the first upstream data transmission rate.

7. The method of claim 5 wherein:
a first one of said IM-ADSL communication links is synchronized at a first downstream data transmission rate; and
a second one of said IM-ADSL communication links is synchronized at a second downstream data transmission rate different than the first downstream data transmission rate.

8. The method of claim 5 wherein:
a first one of said IM-ADSL communication links is synchronized at a first downstream data transmission rate and at a first upstream data transmission rate; and
a second one of said IM-ADSL communication links is synchronized at a second downstream data transmission rate different than the first downstream data transmission rate and at a second upstream data transmission rate different than the first upstream data transmission rate.

9. The method of claim 1, further comprising:
receiving said sequence identified ATM cells by a destination endpoint IMA communication device; and
forwarding an aligned stream of inversely multiplexed ATM cells across a destination endpoint logical communication link.

10. The method of claim 9 wherein receiving said sequence identified ATM cells includes holding at least a portion of said sequence identified ATM cells in a data storage device.

11. The method of claim 10 wherein forwarding the aligned stream of inversely multiplexed ATM cells includes sequentially retrieving said sequence identified ATM cells from the data storage device.

12. The method of claim 11 wherein sequentially retrieving said sequence identified ATM cells includes determining the sequence identifier associated with a plurality of said sequence identified ATM cells.

13. The method of claim 1, further comprising:
receiving said sequence identified ATM cells at a destination endpoint IMA communication device;
determining a next one of said sequence identified ATM cells to forward over a destination endpoint logical communication link; and
forwarding the next one of said sequence identified ATM cells over the destination endpoint logical communication link.

14. The method of claim 13 wherein determining the next one of said sequence identified ATM cells includes determining the sequence identifier for a plurality of sequence identified ATM cells.

15. The method of claim 13 wherein determining and forwarding are facilitated by the destination endpoint IMA communication device.

16. A method for facilitating inverse multiplexing over asynchronous transfer mode, comprising:
receiving a stream of sequentially aligned ATM cells via an originating end point logical communication link;
determining a sequence code for each one of said ATM cells;
inserting the sequence code for each one of said ATM cells into an information block a corresponding one of said ATM cells for creating sequence identified ATM cells;
forwarding said sequence identified ATM cells in a distributed manner over a plurality of IM communication links, wherein a first one of said IM communication links having disparate data transmission rates in at least one data transmission direction with respect to a second one of said IM communication links;
receiving said sequence identified ATM cells at a destination endpoint IMA communication device;
determining a next one of said sequence identified ATM cells to forward over a destination endpoint logical communication link; and
forwarding the next one of said sequence identified ATM cells over the destination endpoint logical communication link.

17. The method of claim 16 wherein forwarding said sequence identified ATM cells in a distributed manner over a plurality IM communication links includes forwarding said sequence identified cells over a plurality of IM-ADSL communication links, each one of the plurality of IM-ADSL communication links synchronized at disparate data transfer rates relative to each other one of the plurality of IM-ADSL communication links.

18. An apparatus for facilitating inverse multiplexing over asynchronous transfer mode (IMA), the apparatus including an originating endpoint IMA communication device, a destination endpoint IMA communication device, and a plurality of IM communication links implemented therebetween, a first one of said IM communication links synchronized at a disparate data transmission rate in at least one data transmission direction with respect to a second one of said IM communication links, the originating endpoint IMA communication device being capable of:
receiving a stream of sequentially aligned ATM cells via an originating end point logical communication link;
associating a sequence identifier with each one of said ATM cells for creating sequence identified ATM cells; and
forwarding said sequence identified ATM cells in a distributed manner over the plurality of IM communication links, wherein a first one of said IM communication links having disparate data transmission rates in at least one data transmission direction with respect to a second one of said IM communication links.

19. The apparatus of claim 18 wherein the originating endpoint IMA communication device being capable of associating the sequence identifier includes the originating endpoint IMA communication device being capable of determining a sequence code for each one of said ATM cells and inserting the sequence code for each one of said ATM cells into a information payload portion of a corresponding one of said ATM cells.

20. The apparatus of claim 18 wherein the originating endpoint IMA communication device being capable of associating the sequence identifier includes the originating endpoint IMA communication device being capable of determining a sequence code for each one of said ATM cells and inserting the sequence code for each one of said ATM cells into a header portion of a corresponding one of said ATM cells.

21. The apparatus of claim 18 wherein the originating endpoint IMA communication device is an originating endpoint IMA-ADSL communication device, the destination endpoint IMA communication device is a destination endpoint IMA-ADSL communication device and the plurality of IM communication links are a plurality of IM-ADSL communication links.

22. The apparatus of claim 21 wherein:
a first one of said IM-ADSL communication links is synchronized at a first upstream data transmission rate; and
a second one of said IM-ADSL communication links is synchronized at a second upstream data transmission rate different than the first upstream data transmission rate.

23. The apparatus of claim 21 wherein:
a first one of said IM-ADSL communication links is synchronized at a first downstream data transmission rate; and
a second one of said IM-ADSL communication links is synchronized at a second downstream data transmission rate different than the first downstream data transmission rate.

24. The apparatus of claim 21 wherein:
a first one of said IM-ADSL communication links is synchronized at a first downstream data transmission rate and at a first upstream data transmission rate; and
a second one of said IM-ADSL communication links is synchronized at a second downstream data transmission rate different than the first downstream data transmission rate and at a second upstream data transmission rate different than the first upstream data transmission rate.

25. The apparatus of claim 18 wherein the destination endpoint IMA communication device being capable of:
receiving said sequence identified ATM cells; and
forwarding an aligned stream of inversely multiplexed ATM cells across a destination endpoint logical communication link.

26. The apparatus of claim 25 wherein the destination endpoint IMA communication device being capable of receiving said sequence identified ATM cells includes the destination endpoint IMA communication device being capable of holding at least a portion of said sequence identified ATM cells in a data storage device.

27. The apparatus of claim 26 wherein the destination endpoint IMA communication device being capable of forwarding the aligned stream of inversely multiplexed ATM cells includes the destination endpoint IMA communication device being capable of sequentially retrieving said sequence identified ATM cells from the data storage device.

28. The apparatus of claim 27 wherein the destination endpoint IMA communication device being capable of sequentially retrieving said sequence identified ATM cells includes the destination endpoint IMA communication device being capable of determining the sequence identifier associated with a plurality of said sequence identified ATM cells.

29. The apparatus of claim 18 wherein the destination endpoint IMA communication device is capable of:
receiving said sequence identified ATM cells via at least two of the plurality of IM communication links;
determining a next one of said sequence identified ATM cells to forward over a destination endpoint logical communication link; and
forwarding the next one of said sequence identified ATM cells over the destination endpoint logical communication link.

30. The apparatus of claim 29 wherein the destination endpoint IMA communication device being capable of determining the next one of said sequence identified ATM cells includes the destination endpoint IMA communication device being capable of determining the sequence identifier for a plurality of sequence identified ATM cells.

31. An apparatus for facilitating inverse multiplexing over asynchronous transfer mode, the apparatus including an originating endpoint IMA-ADSL communication device, a destination endpoint IMA-ADSL communication device, and a plurality of IM communication links implemented therebetween, a first one of said IM-ADSL communication links synchronized at a disparate data transmission rate in at least one data transmission direction with respect to a second one of said IM communication links, the originating endpoint IMA-ADSL communication device being capable of:
receiving a stream of sequentially aligned ATM cells via an originating end point logical communication link;
determining a sequence code for each one of said ATM cells;
inserting the sequence code for each one of said ATM cells into an information block a corresponding one of said ATM cells for creating sequence identified ATM cells;
forwarding said sequence identified ATM cells in a distributed manner over a plurality of IM communication links, wherein a first one of said IM communication links having disparate data transmission rates in at least one data transmission direction with respect to a
second one of said IM communication links; and
the originating endpoint IMA-ADSL communication device being capable of:
receiving said sequence identified ATM cells at a destination endpoint IMA communication device;
determining a next one of said sequence identified ATM cells to forward over a destination endpoint logical communication link; and
forwarding the next one of said sequence identified ATM cells over the destination endpoint logical communication link.

32. data processor program product, comprising:
a data processor program processable by a data processor of an originating endpoint IMA communication device; and
an apparatus from which the data processor program is accessible by the data processor of the originating endpoint IMA communication device;
the data processor program being capable of enabling the originating endpoint IMA communication device to:
receive a stream of sequentially aligned ATM cells via an originating end point logical communication link;
associate a sequence identifier with each one of said ATM cells for creating sequence identified ATM cells; and
forward said sequence identified ATM cells in a distributed manner over a plurality of IM communication links to a destination endpoint IMA communication device, wherein a first one of said IM communication links having disparate data transmission rates in at least one data transmission direction with respect to a second one of said IM communication links.

33. The data processor program of claim 32 wherein the data processor program being capable of enabling the originating endpoint IMA communication device to associate the sequence identifier includes the data processor program being capable of enabling the originating endpoint IMA communication device to determine a sequence code for each one of said ATM cells and to insert the sequence code for each one of said ATM cells into an information payload portion of a corresponding one of said ATM cells.

34. The data processor program of claim 32 wherein the data processor program being capable of enabling the originating endpoint IMA communication device to associate the sequence identifier includes the data processor program being capable of enabling the originating endpoint IMA communication device to determine a sequence code for each one of said ATM cells and to insert the sequence code for each one of said ATM cells into a header portion of a corresponding one of said ATM cells.

35. The data processor program of claim 32 wherein the data processor program being capable of enabling the originating endpoint IMA communication device to forward said sequence identified ATM cells in a distributed manner over a plurality IM communication links includes the data processor program being capable of enabling the originating endpoint IMA communication device to forward said sequence identified cells over a plurality of IM-ADSL communication links.

36. The data processor program of claim 35 wherein:
a first one of said IM-ADSL communication links is synchronized at a first upstream data transmission rate; and
a second one of said IM-ADSL communication links is synchronized at a second upstream data transmission rate different than the first upstream data transmission rate.

37. The data processor program of claim 35 wherein:
a first one of said IM-ADSL communication links is synchronized at a first downstream data transmission rate; and
a second one of said IM-ADSL communication links is synchronized at a second downstream data transmission rate different than the first downstream data transmission rate.

38. The data processor program of claim 35 wherein:
a first one of said IM-ADSL communication links is synchronized at a first downstream data transmission rate and at a first upstream data transmission rate; and
a second one of said IM-ADSL communication links is synchronized at a second downstream data transmission rate different than the first downstream data transmission rate and at a second upstream data transmission rate different than the first upstream data transmission rate.

39. data processor program product, comprising:
a data processor program processable by a data processor of a destination endpoint IMA communication device; and
an apparatus from which the data processor program is accessible by the data processor of the destination endpoint IMA communication device;
the data processor program being capable of enabling the destination endpoint IMA communication device to:
receive sequence identified ATM cells in a distributed manner via a plurality of IM communication links from an originating endpoint IMA communication device ; and
forward an aligned stream of inversely multiplexed ATM cells across a destination endpoint logical communication link.

40. The data processor program of claim 39 wherein the data processor program being capable of enabling the destination endpoint IMA communication device to receive said sequence identified ATM cells includes the data processor program being capable of enabling the destination endpoint IMA communication device to hold at least a portion of said sequence identified ATM cells in a data storage device.

41. The data processor program of claim 40 wherein the data processor program being capable of enabling the destination endpoint IMA communication device to forward the aligned stream of inversely multiplexed ATM cells includes the data processor program being capable of enabling the destination endpoint IMA communication device to sequentially retrieve said sequence identified ATM cells from the data storage device.

42. The data processor program of claim 41 wherein the data processor program being capable of enabling the destination endpoint IMA communication device to sequentially retrieve said sequence identified ATM cells includes the data processor program being capable of enabling the destination endpoint IMA communication device to determine the sequence identifier associated with a plurality of said sequence identified ATM cells.

43. The data processor program of claim 39 wherein the data processor program being capable of enabling the destination endpoint IMA communication device to forward an aligned stream of inversely multiplexed ATM cells includes the data processor program being capable of enabling the destination endpoint IMA communication
device to:
determine a next one of said sequence identified ATM cells to forward over the destination endpoint logical communication link; and
forward the next one of said sequence identified ATM cells over the destination endpoint logical communication link.

44. The data processor program of claim 13 wherein the data processor program being capable of enabling the destination endpoint IMA communication device to determine the next one of said sequence identified ATM cells includes the data processor program being capable of enabling the destination endpoint IMA communication device to determine the sequence identifier for a plurality of sequence identified ATM cells.
